# EUROPEAN PATENT APPLICATION

(11) **EP 4 723 135 A1**
(43) Date of publication of application: **08.04.2026**
(21) Application number: 24854046.0
(22) Date of filing: 17.04.2024
(51) Int. Cl.: G21K 4/00, C09K 11/00, C09K 11/54, G01T 1/20, H01J 37/244

(54) **SCINTILLATOR**

(30) Priority: 14.08.2023 JP 2023131796
(71) Applicant: Hamamatsu Photonics K.K., Hamamatsu-shi, Shizuoka 435-8558 (JP); National University Corporation Shimane University, Matsue-shi, Shimane 690-8504 (JP)
(72) Inventor: FUJITA, Yasuhisa, Matsue-shi, Shimane 690-8504 (JP); SUGIYAMA, Hiroyuki, Hamamatsu-shi, Shizuoka 435-8558 (JP); NAKAMURA, Takayuki, Hamamatsu-shi, Shizuoka 435-8558 (JP)
(74) Representative: Grünecker Patent- und Rechtsanwälte PartG mbB
(86) International application number: PCT/JP2024/015327
(87) International publication number: WO 2025/037454

(57) **Abstract**

A scintillator includes a support substrate; and an emission layer that is formed of ZnO, is disposed on the support substrate, and emits light in response to an incidence of charged particles or photons. The emission layer includes a plurality of first layers having a first impurity concentration, and a plurality of second layers alternately stacked with the plurality of first layers and having a second impurity concentration lower than the first impurity concentration.

## Description

### Technical Field

The present disclosure relates to a scintillator.

### Background Art

Patent Literature 1 describes a scintillator that includes an emission layer made of ZnO and that generates scintillation light in response to the incidence of radiation. In the scintillator described in Patent Literature 1, since the emission layer is made of ZnO, the emission lifetime (emission time) of the scintillation light is short, and high-speed responsiveness is realized.

### Citation List

### Patent Literature

Patent Literature 1: Japanese Patent No. 6676372

### Summary of Invention

### Technical Problem

The scintillator described above can be used to convert electrons into light in a photodetector used in, for example, a scanning electron microscope (SEM), a time-of-flight mass spectrometer (TOF-MS), or the like. For such a scintillator, in addition to shortening the emission time (high speed), increasing the brightness of the light (high brightness) is required. On the other hand, when the emission time is short, the amount of light signal may decrease, and the brightness of the light may decrease.

Therefore, an object of one aspect of the present disclosure is to provide a scintillator that can achieve both high speed and high brightness.

### Solution to Problem

A scintillator according to one aspect of the present disclosure is [1] "a scintillator including a support substrate; and an emission layer that is formed of ZnO, is disposed on the support substrate, and emits light in response to an incidence of charged particles or photons. The emission layer includes a plurality of first layers having a first impurity concentration, and a plurality of second layers alternately stacked with the plurality of first layers and having a second impurity concentration lower than the first impurity concentration."

In the scintillator 1, since the emission layer is formed of ZnO, the emission time of scintillation light can be shortened, and high speed can be achieved. In addition, the emission layer has a structure in which the plurality of first layers having the first impurity concentration and the plurality of second layers having the second impurity concentration lower than the first impurity concentration are alternately stacked. Accordingly, it is possible to achieve high brightness while maintaining high-speed performance. In such a manner, according to the scintillator, both high speed and high brightness can be achieved.

A scintillator according to one aspect of the present disclosure may be [2] "the scintillator according to [1] in which an impurity contained in the plurality of first layers is Ga, Al, In, Sb, F, Cl, or I", or may be [3] "the scintillator according to [1] or [2] in which the first impurity concentration is 4 x 10²⁰ atoms/cm³ or less." In these cases, the above-described effect of being able to achieve both high speed and high brightness is suitably exhibited.

A scintillator according to one aspect of the present disclosure may be [4] "the scintillator according to any one of [1] to [3] in which a thickness of each of the plurality of first layers is smaller than 20 nm." In this case, the brightness of light can be effectively increased.

A scintillator according to one aspect of the present disclosure may be [5] "the scintillator according to any one of [1] to [4] in which the support substrate is formed of sapphire, quartz, glass, ScMgAlO₄, or GaN", or may be [6] "the scintillator according to any one of [1] to [5] in which the support substrate is a sapphire substrate having an a-plane as a main surface, and the emission layer is disposed on the main surface." In these cases, the above-described effect of being able to achieve both high speed and high brightness is suitably exhibited.

A scintillator according to one aspect of the present disclosure may be [7] "the scintillator according to any one of [1] to [6] further includes a metal layer disposed on the emission layer on a side opposite to the support substrate." In this case, the light from the emission layer can be reflected by the metal layer toward the support substrate side, and the utilization efficiency of the light can be increased.

A scintillator according to one aspect of the present disclosure may be [8] "the scintillator according to [7] in which the metal layer is formed of Al or Ti." In this case, the utilization efficiency of the light can be effectively improved.

A scintillator according to one aspect of the present disclosure may be [9] "the scintillator according to [7] or [8] further includes a protection layer having a larger bandgap than ZnO and disposed between the emission layer and the metal layer." In this case, the outflow of electrons or holes generated in the emission layer to the metal layer can be suppressed, and the emission efficiency of the emission layer can be increased.

A scintillator according to one aspect of the present disclosure may be [10] "the scintillator according to any one of [1] to [9] further includes a buffer layer formed of ZnO and disposed between the support substrate and the emission layer." In this case, the emission layer can be suitably formed on the support substrate.

A scintillator according to one aspect of the present disclosure may be [11] "the scintillator according to any one of [1] to [10] in which a thickness of each of the plurality of first layers is 2.5 nm or more and 15 nm or less." In this case, the brightness of the light can be effectively increased.

A scintillator according to one aspect of the present disclosure may be [12] "the scintillator according to any one of [1] to [11] in which a thickness of each of the plurality of first layers is equal to a thickness of each of the plurality of second layers." In this case, high speed can be more effectively achieved.

### Advantageous Effects of Invention

According to one aspect of the present disclosure, it is possible to provide the scintillator that can achieve both high speed and high brightness.

### Brief Description of Drawings

[FIG. 1] FIG. 1 is a cross-sectional view of a scintillator according to an embodiment.
[FIG. 2] FIG. 2 is a graph showing the comparison results of CL spectra.
[FIG. 3] FIG. 3 is a graph showing the comparison results of the voltage dependence of cathodoluminescence.
[FIG. 4] FIG. 4 is a table showing the comparison results of afterglow characteristics.
[FIG. 5] FIG. 5 is a graph showing an example of the distribution of Ga concentration in an emission layer.
[FIG. 6] FIG. 6 is a graph showing the comparison results of spectra.
[FIG. 7] FIG. 7 is a view for describing the enhancement of emission by a multilayer structure.
[FIG. 8] FIG. 8 is a cross-sectional view of a scintillator according to a modification example.
[FIG. 9] FIG. 9 is a graph showing the comparison results of the voltage dependence of cathodoluminescence.
[FIG. 10] FIG. 10 is a table showing the comparison results of the afterglow characteristics of cathodoluminescence.
[FIG. 11] FIG. 11 is a graph showing the comparison results of the intensities of photoluminescence.
[FIG. 12] FIG. 12 is a table showing the comparison results of the afterglow characteristics of photoluminescence.

### Description of Embodiments

Hereinafter, an embodiment of the present disclosure will be described in detail with reference to the drawings. In the following description, the same or equivalent elements are denoted by the same reference signs, and redundant descriptions will be omitted.

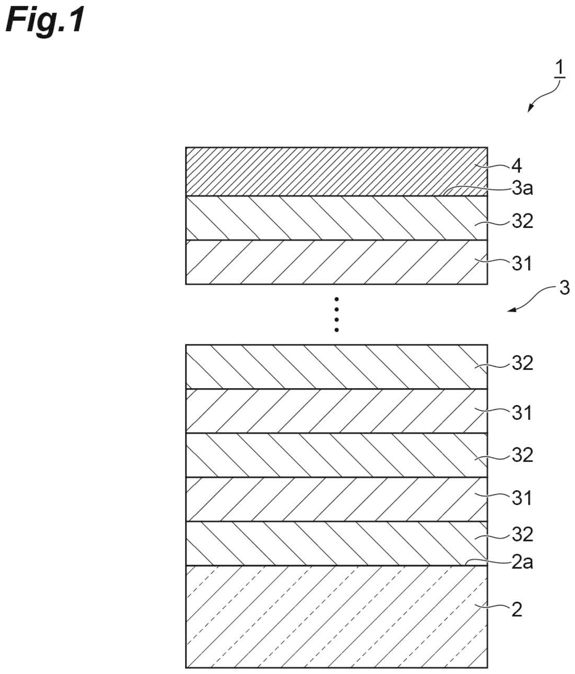

As shown in FIG. 1, a scintillator 1 includes a support substrate 2, an emission layer 3, and a metal layer 4. The emission layer 3 is disposed on a main surface 2a of the support substrate 2, and the metal layer 4 is disposed on a surface 3a of the emission layer 3 opposite to the support substrate 2. In the scintillator 1, scintillation light (fluorescence) is generated in the emission layer 3 in response to the incidence of charged particles (for example, electrons), and the emission layer 3 emits the light. The scintillator 1 can be used to convert electrons into light in a photodetector used in, for example, a scanning electron microscope, a time-of-flight mass spectrometer, or the like.

The support substrate 2 is a sapphire substrate (a-plane sapphire substrate) having an a-plane (crystal plane) as the main surface 2a. The support substrate 2 is transmissive to the scintillation light generated in the emission layer 3. In the scintillator 1, the scintillation light generated in the emission layer 3 transmits through the support substrate 2 and is emitted to the outside.

The emission layer 3 is formed by alternately stacking a plurality of first layers 31 and a plurality of second layers 32. In this example, the second layers 32 are disposed at both ends of the emission layer 3 in a stacking direction, and the emission layer 3 is in contact with the support substrate 2 and the metal layer 4 at the second layers 32.

The emission layer 3 (the first layers 31 and the second layers 32) are formed of zinc oxide (ZnO). In the emission layer 3, the impurity concentrations of the first layer 31 and the second layer 32 are set such that a first impurity concentration of the first layer 31 is higher than a second impurity concentration of the second layer 32 (such that the second impurity concentration of the second layer 32 is lower than the first impurity concentration of the first layer 31).

In this example, the first layer 31 is a layer doped with an impurity (doped layer), and the second layer 32 is a layer not doped with an impurity (undoped layer). The impurity with which the first layer 31 is doped is gallium (Ga), and the impurity concentration (first impurity concentration) of the first layer 31 is, for example, approximately 1 x 10²⁰ atoms/cm³. The impurity concentration (second impurity concentration) of the second layer 32 is, for example, approximately 1 x 10¹⁸ atoms/cm³. In such a manner, the undoped layer refers to a layer not intentionally doped with an impurity during formation unlike the doped layer that is a layer intentionally doped with an impurity during formation, and as a result, the impurity concentration is two or more orders of magnitude lower than that of the doped layer (equal to or less than 1/100 of the concentration). In this example, a thickness of the emission layer 3 is 1 µm, and a thickness of each of the first layers 31 and a thickness of each of the second layers 32 is 10 nm.

The metal layer 4 is formed of, for example, aluminum (Al). The metal layer 4 reflects the scintillation light from the emission layer 3 toward the support substrate 2 side. That is, a portion of the scintillation light generated in the emission layer 3 is reflected by the metal layer 4, and then transmits through the support substrate 2 and is emitted to the outside. In addition, the metal layer 4 can also be used as an electrode for applying a voltage when a voltage is applied to the emission layer 3.

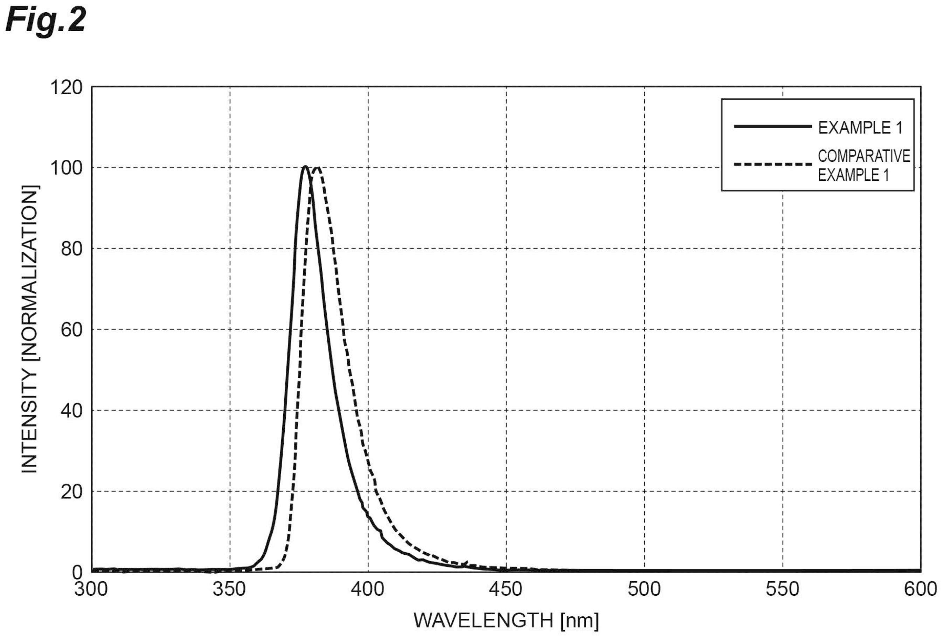

Hereinafter, the results of checking the characteristics of the scintillator 1 will be described with reference to FIGS. 2 to 4. FIG. 2 is a graph showing the comparison results of cathodoluminescence (CL) spectra for Example 1 and Comparative Example 1. The CL spectrum is the spectrum of light generated when a target is irradiated with accelerated electrons. Example 1 corresponds to the scintillator 1. Comparative Example 1 corresponds to the case where the emission layer 3 in the scintillator 1 does not include a plurality of layers, but is composed of a single layer having a thickness of 1 µm and an impurity concentration of 7 x 10¹⁹ atoms/cm³. The acceleration voltage of an electron beam incident on the scintillator was set to 10 kV.

As shown in FIG. 2, the shapes of the CL spectra of Example 1 and Comparative Example 1 were similar, and even in Example 1 in which the emission layer had a multilayer structure (superlattice structure), no defect-derived emission occurred similarly to Comparative Example 1 in which the emission layer had a single-layer structure. In addition, from FIG. 2, it can be seen that even in Example 1, approximately the same high-speed performance (short emission time) as that of Comparative Example 1 was maintained. In addition, from FIG. 2, it can be seen that, in Example 1, not only are there no defects, but the emission wavelength is also blue-shifted (transitioning to the shorter wavelength side) compared to Comparative Example 1. This indicates that, due to high emission in the undoped layer with a low carrier density, emission due to transitions between the impurities which has a long wavelength and a long emission lifetime decreases, and the proportion of excitation emission increases.

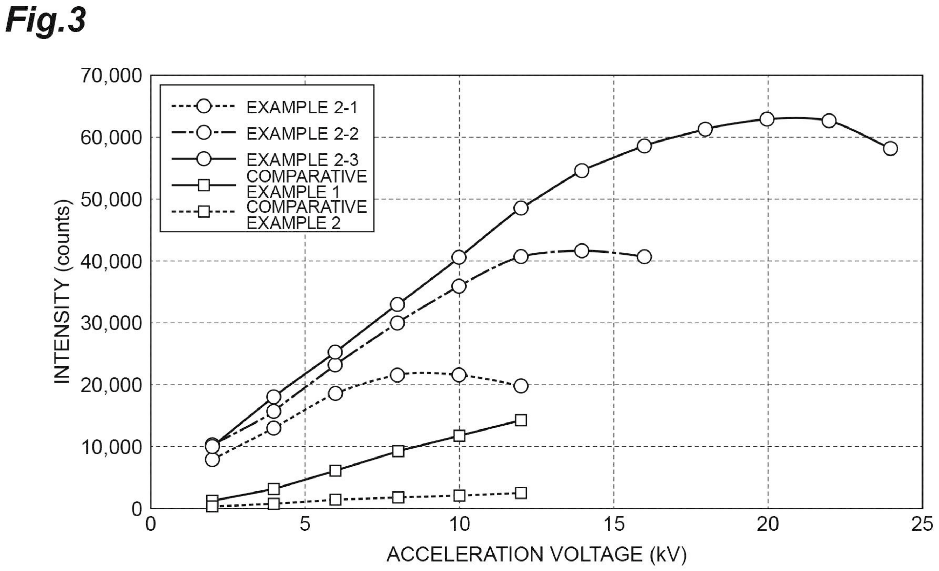

FIG. 3 is a graph showing the voltage dependence of cathodoluminescence for Examples 2-1, 2-2, and 2-3 and Comparative Examples 1 and 2. The graph of FIG. 3 shows the relationship between the acceleration voltage of the electron beam incident on the scintillator (horizontal axis) and the intensity of the scintillation light (vertical axis). Examples 2-1 to 2-3 correspond to the cases where the thicknesses of the emission layer 3 in the scintillator 1 are 1 µm, 2 µm, and 3 µm, respectively. Comparative Example 2 corresponds to the case where the impurity concentration of the emission layer in Comparative Example 1 is 2 x 10²⁰ atoms/cm³. That is, the impurity concentration of the emission layer in Comparative Example 2 is higher than that in Comparative Example 1. In Examples 2-1 to 2-3 and Comparative Examples 1 and 2, the metal layer 4 was not provided. The value of a current flowing through the emission layer 3 was set to 0.8 µA/cm².

From FIG. 3, it can be seen that in Examples 2-1 to 2-3, the emission intensity of the scintillation light was higher and the brightness was higher compared to Comparative Examples 1 and 2. In addition, from the comparison of the emission intensities of Examples 2-1 to 2-3 in a high-acceleration region (a region on the right side in the graph of FIG. 3), it can be seen that as the thickness of the emission layer 3 became thicker, the brightness of the scintillation light in the high-acceleration region increased significantly.

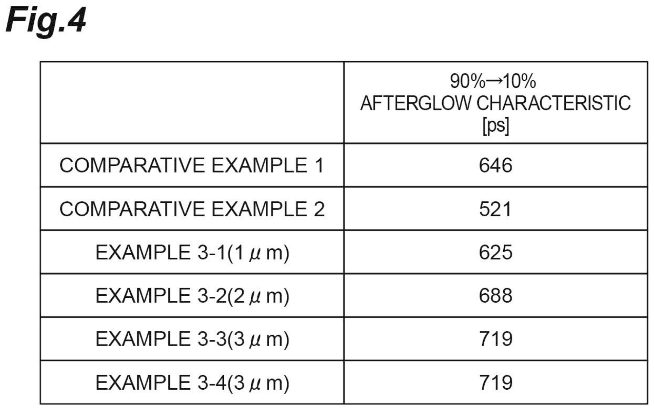

FIG. 4 is a table showing the comparison results of afterglow characteristics for Examples 3-1, 3-2, 3-3, and 3-4 and Comparative Examples 1 and 2. The "90% to 10% afterglow characteristics" shown in the table of FIG. 4 refers to the time it takes for the brightness of the scintillation light generated by cathodoluminescence to decrease from 90% at the time of emission to 10%. Examples 3-1 to 3-4 correspond to the cases where the thicknesses of the emission layer 3 in the scintillator 1 are 1 µm, 2 µm, 3 µm, and 3 µm, respectively. From FIG. 4, it can be seen that the afterglow characteristics of Examples 3-1 to 3-4 were approximately the same as those of Comparative Examples 1 and 2, and that the Examples 3-1 to 3-4 had approximately the same high-speed performance as Comparative Example 1 and 2.

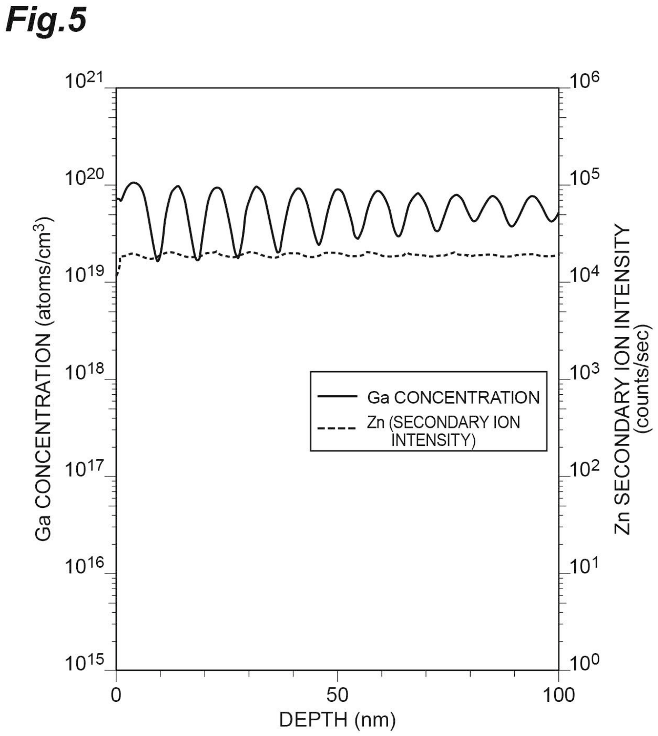

FIG. 5 is a graph showing an example of the distribution of the Ga concentration and the Zn secondary ion intensity in the emission layer 3 of Example 4. Example 4 differs from the scintillator 1 only in the thicknesses of the first layer 31 and the second layer 32 that constitute the emission layer 3. In the graph of FIG. 5, the depth from the surface 3a on the metal layer 4 side of the emission layer 3 is shown on the horizontal axis, and the Ga concentration and the Zn secondary ion intensity are shown on the left vertical axis and the right vertical axis, respectively. Measurement was performed by secondary ion mass spectrometry (SIMS). From the distribution of the Ga concentration in the graph of FIG. 5, it can be seen that in the emission layer 3 of the scintillator 1, the first layers 31 with a higher impurity concentration and the second layers 32 with a lower impurity concentration were alternately stacked, each having a thickness of 4 to 5 nm. Incidentally, in the graph of FIG. 5, due to the degradation of the resolution in a depth direction, the Ga concentration becomes smaller than the actual value at deeper positions. In addition, from the distribution of the Zn secondary ion intensity, it can be seen that both the first layer 31 and the second layer 32 were layers containing ZnO as a main component, and that Zn were uniformly distributed throughout the entirety of the emission layer 3.

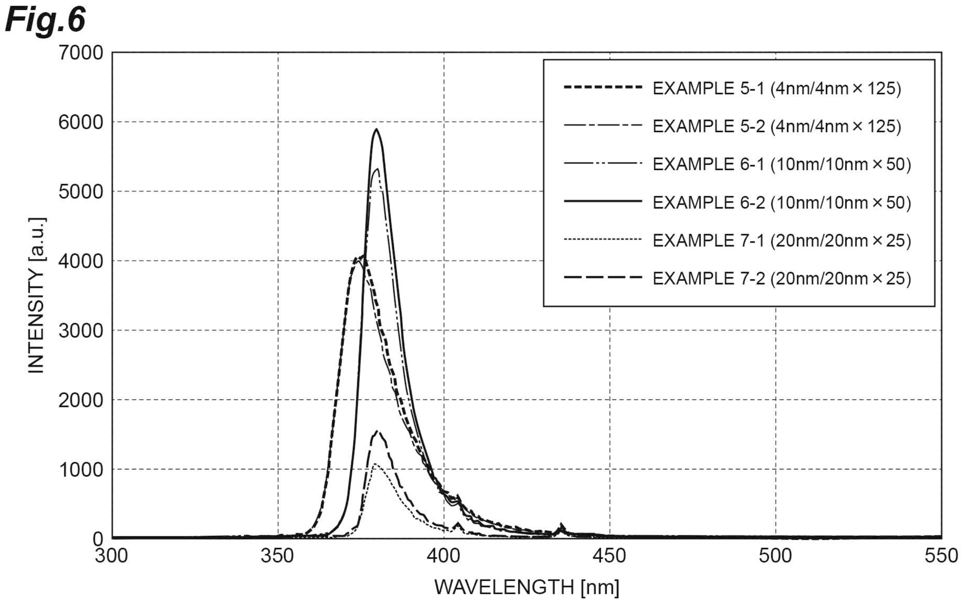

FIG. 6 is a graph showing the comparison results of CL spectra for Examples 5-1, 5-2, 6-1, 6-2, 7-1, and 7-2 (5-1 to 7-2). Examples 5-1 to 7-2 correspond to the cases where the thickness of each of the first layer 31 and the second layer 32 in the scintillator 1 is 4 nm in Examples 5-1 and 5-2, 10 nm in Examples 6-1 and 6-2, and 20 nm in Examples 7-1 and 7-2. In Examples 5-1 to 7-2, one pair was composed of one first layer 31 and one second layer 32, and the number of pairs of the first layer 31 and the second layer 32 was set such that the thickness of the emission layer 3 was 1 µm. Specifically, the number of pairs of the first layer 31 and the second layer 32 was 125 in Examples 5-1 and 5-2, 50 in Examples 6-1 and 6-2, and 25 in Examples 7-1 and 7-2. In Examples 5-1 to 7-2, the metal layer 4 was not provided. The acceleration voltage of the electron beam incident on the scintillator was set to 8 kV. The value of a current flowing through the emission layer 3 was set to 0.8 µA/cm². The exposure time was set to 200 ms.

From FIG. 6, when the emission intensities at the peak wavelengths are compared, it can be seen that the emission intensities of Examples 6-1 and 6-2 were higher than the emission intensities of Examples 5-1 and 5-2, and that the emission intensities of Examples 5-1 and 5-2 were higher than the emission intensities of Examples 7-1 and 7-2. From this, it can be seen that high brightness can be achieved by setting the thicknesses of the first layer 31 and the second layer 32 to be smaller than 20 nm (20 nm or less). Incidentally, when the emission layer has a single-layer structure and the thickness of the emission layer is 1 µm as in Comparative Example 1 described above, the emission intensity is lower than those of Examples 5-1 and 5-2 and higher than those of Examples 7-1 and 7-2.

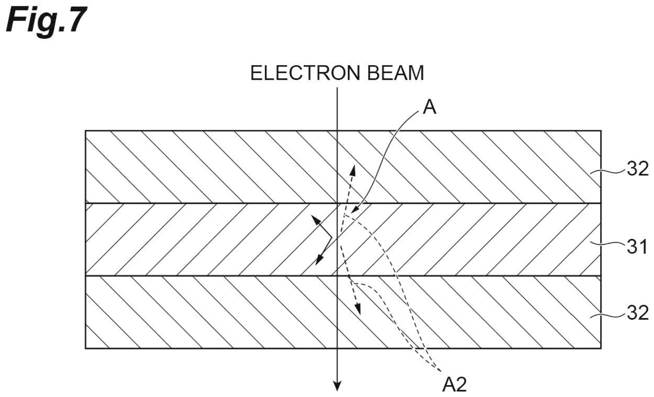

With reference to FIG. 7, the enhancement of emission by forming the emission layer 3 into a multilayer structure will be described. FIG. 7 shows only three layers among the first layers 31 and the second layers 32 that constitute the emission layer 3. First, in a case where the emission layer has a single-layer structure as in Comparative Example 1 described above, when the free electron concentration is increased by Ga doping, the emission intensity increases; however, emission due to transitions between the impurities (donor-acceptor emission) which has a slow fluorescence speed increases compared to free exciton emission which has a short fluorescence lifetime, and the high-speed performance is impaired. Furthermore, non-radiative recombination (Auger effect) increases due to absorption of transition energy by free electrons, thereby causing slow emission (emission with a long emission time) to be quenched, so that it is possible to realize high speed, but it is difficult to increase brightness. Therefore, the thickness of the emission layer is determined based on the penetration depth of electrons, fluorescence self-absorption, and the like. In addition, even when an attempt is made to increase the amount of emission by increasing the thickness of the emission layer so as to increase the amount of absorption of the incident electron beam, the enhancement of emission is difficult due to fluorescence self-absorption.

In contrast, the emission layer 3 of the scintillator 1 has a multilayer structure, so that free electrons in the first layer 31 can be diffused into the second layer 32, thereby increasing the contribution of emission in the second layer 32 having a lower impurity concentration than the first layer 31. As a result, it is considered that the emission can be enhanced. That is, as shown in FIG. 7, since the thickness of the first layer 31 is close to the wavelength of electrons, free electrons A confined in the first layer 31 are in an environment where the free electrons A easily migrate into the second layer 32, and it is considered that free electrons A2 supplied to the second layer contribute to emission in the second layer. Accordingly, the electron concentration of the heavily doped first layer decreases, so that quenching due to the Auger effect is reduced, and the emission intensity of the first layer is also increased. That is, it is considered that the functional separation of carrier generation in the first layer 31 and emission in the second layer 32 can be realized.

### [Functions and effects]

As described above, in the scintillator 1, since the emission layer 3 is formed of ZnO, the emission time of the scintillation light can be shortened, and high speed can be achieved. In addition, the emission layer 3 has a structure (multilayer structure) in which the plurality of first layers 31 having the first impurity concentration and the plurality of second layers 32 having the second impurity concentration lower than the first impurity concentration are alternately stacked. Accordingly, it is possible to achieve high brightness while maintaining high-speed performance. In such a manner, according to the scintillator 1, both high speed and high brightness can be achieved. In addition, in the scintillator 1, since the emission layer 3 is formed of ZnO, the emission layer 3 can be formed uniformly even when it is necessary to increase the thickness of the emission layer 3 or even when the emission layer 3 is produced repeatedly.

The first layer 31 contains Ga as an impurity. In addition, the first impurity concentration of the first layer 31 is 4 x 10²⁰ atoms/cm³ or less. Accordingly, the above-described effect of being able to achieve both high speed and high brightness is suitably exhibited.

The thickness of the first layer 31 is smaller than 20 nm (20 nm or less). Accordingly, the brightness of the scintillation light can be effectively increased. Furthermore, since the quantum effect is more strongly exhibited by setting the thickness of the first layer 31 to 10 nm or less, the brightness of the light can be more effectively increased.

The support substrate 2 is a sapphire substrate having an a-plane as the main surface 2a, and the emission layer 3 is disposed on the main surface 2a. Accordingly, the above-described effect of being able to achieve both high speed and high brightness is suitably exhibited.

The metal layer 4 is formed on the emission layer 3 on the side opposite to the support substrate 2. Accordingly, the scintillation light from the emission layer 3 can be reflected by the metal layer 4 toward the support substrate 2 side, and the utilization efficiency of the light can be increased.

The metal layer 4 is formed of Al. Accordingly, the utilization efficiency of the scintillation light can be effectively increased.

### [Modification example]

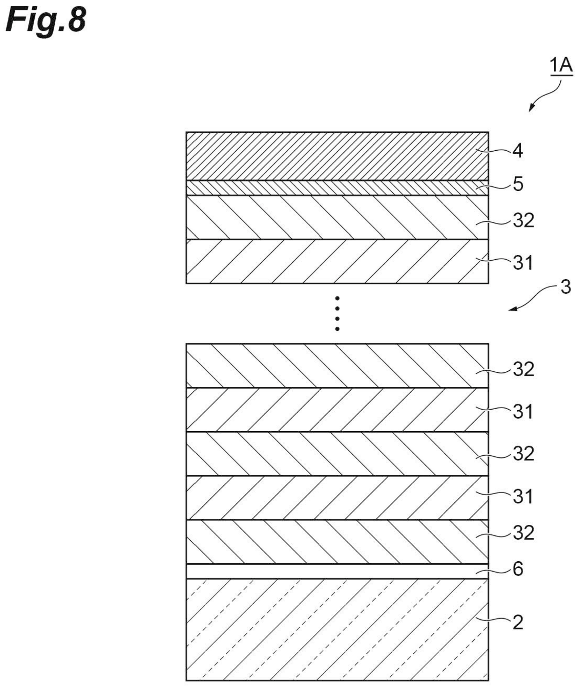

As in a scintillator 1A of a modification example shown in FIG. 8, a protection layer 5 having a larger bandgap than ZnO may be provided between the emission layer 3 and the metal layer 4. In this case, the outflow of electrons or holes generated in the emission layer 3 to the metal layer 4 can be suppressed, and the emission efficiency of the emission layer 3 can be increased. In addition, a buffer layer 6 formed of ZnO may be provided between the support substrate 2 and the emission layer 3. In this case, the emission layer 3 can be suitably formed on the support substrate 2.

The present disclosure is not limited to the embodiment and the modification example described above. The material and shape of each configuration are not limited to the material and shape described above, and various materials and shapes can be adopted. For example, the impurity with which the first layer 31 is doped is not limited to Ga, and may be aluminum (Al), indium (In), antimony (Sb), fluorine (F), chlorine (Cl) or iodine (I). The metal layer 4 may be formed of titanium (Ti). The support substrate 2 may not be a sapphire substrate having an a-plane as the main surface, and may be, for example, a sapphire substrate having a c-plane as the main surface. The support substrate 2 may not be formed of sapphire, but may be formed of, for example, quartz, glass, scandium magnesium aluminate (ScMgAlO₄), or gallium nitride (GaN). The emission layer 3 may be in contact with the support substrate 2 and the metal layer 4 at the second layers 32 instead of the first layers 31.

In the above-described embodiment, the second layer 32 is an undoped layer; however, similarly to the first layer 31, the second layer 32 may also be a doped layer doped with an impurity as long as the first impurity concentration of the first layer 31 is higher than the second impurity concentration of the second layer 32. In this specification, "the emission layer 3 is formed of ZnO" means that the emission layer 3 is mainly composed of ZnO. "The emission layer 3 is formed of ZnO" includes a case where ZnO constituting the emission layer 3 is doped with an impurity. In the example described above, the first layer 31 is a doped layer in which ZnO is doped with an impurity, and the second layer 32 is an undoped layer in which ZnO is not doped with an impurity or a doped layer in which ZnO is doped with an impurity. "The emission layer 3 is formed of ZnO" does not include, for example, a case where the emission layer 3 is mainly composed of GaN, MgZnO, or the like. In the above-described embodiment, the emission layer 3 has been described as emitting light in response to the incidence of charged particles; however, the emission layer 3 can also emit light in response to the incidence of photons (for example, ultraviolet rays). In this case, in the emission layer 3, scintillation light is generated by photoluminescence (PL). According to the scintillator 1, even for emission in response to the incidence of photons, both high speed and high brightness can be achieved.

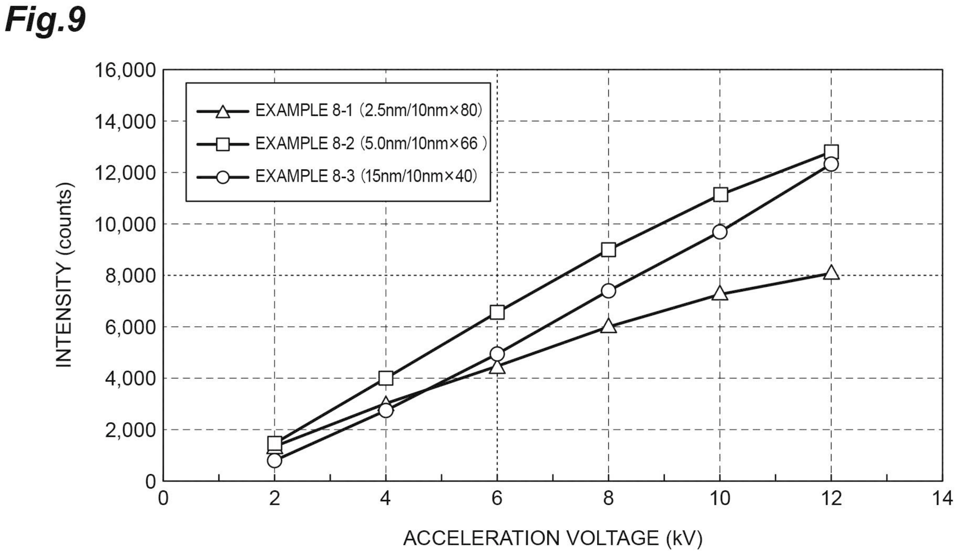

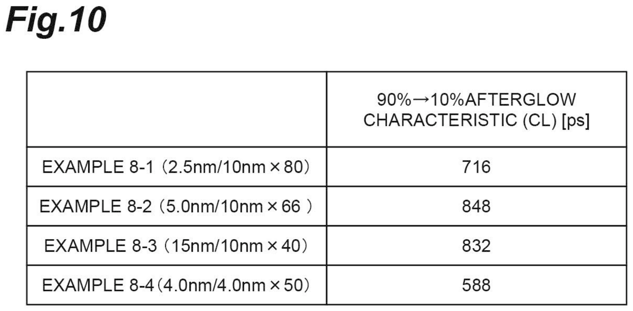

FIGS. 9 to 12 show experimental results for Examples 8-1, 8-2, 8-3, and 8-4. Example 8-4 is not shown in FIGS. 9, 11, and 12, but is shown only in FIG. 10.

Examples 8-1 to 8-3 correspond to the cases where in the scintillator 1, the thicknesses of the second layers 32 that are undoped layers are uniformly set to 10 nm and the thicknesses of the first layers 31 that doped layers are set to different thicknesses. Specifically, the thickness of the first layer 31 was set to 2.5 nm in Example 8-1, 5.0 nm in Example 8-2, and 10 nm in Example 8-3. In Examples 8-1 to 8-3, one pair was composed of one first layer 31 and one second layer 32, and the number of pairs of the first layer 31 and the second layer 32 was set such that the thickness of the emission layer 3 was approximately 1 µm. Specifically, the number of pairs of the first layer 31 and the second layer 32 was 80 in Example 8-1, 66 in Example 8-2, and 40 in Example 8-3. The thicknesses of the emission layer 3 in Examples 8-1 to 8-3 were 1038 nm, 1045 nm, and 1048 nm, respectively. The first impurity concentration of the first layer 31 in Examples 8-1 to 8-3 was 7.96 x 10¹⁹ atoms/cm³. In Examples 8-1 to 8-3, the metal layer 4 was not provided.

Example 8-4 corresponds to the case where in the scintillator 1, the thickness of the first layer 31 is 4.0 nm and the thickness of the second layer 32 is 4.0 nm. That is, unlike Examples 8-1 to 8-3, in Example 8-4, the thickness of the first layer 31 and the thickness of the second layer 32 were set to be same. The number of pairs of the first layer 31 and the second layer 32 were set to 50 such that the thickness of the emission layer 3 was 0.4 µm. In Example 8-4, the metal layer 4 was not provided.

FIG. 9 is a graph showing the voltage dependence of cathodoluminescence for Examples 8-1 to 8-3. The graph of FIG. 9 shows the relationship between the acceleration voltage of an electron beam incident on the scintillator (horizontal axis) and the intensity of the scintillation light (vertical axis). The value of a current flowing through the emission layer 3 was set to 0.8 µA/cm².

From FIG. 9, it can be seen that in Example 8-2 in which the thickness of the first layer 31 was 5.0 nm, the emission intensity of the scintillation light was higher and the brightness was higher compared to Example 8-1 in which the thickness of the first layer 31 was 2.5 nm and Example 8-3 in which the thickness of the first layer 31 was 15 nm. From this, when the thickness of the first layer 31 is increased from 2.5 nm to 15 nm, it is considered that the emission intensity of the scintillation light increases until a predetermined thickness (for example, 5.0 nm) is reached, and then decreases. Therefore, it is considered that high brightness can be achieved by setting the thickness of the first layer 31 to 2.5 nm or more and 15 nm or less.

FIG. 10 is a table showing the comparison results of afterglow characteristics for Examples 8-1 to 8-4. The "90% to 10% afterglow characteristics" shown in the table of FIG. 10 refers to the time it takes for the brightness of the scintillation light generated by cathodoluminescence to decrease from 90% at the time of emission to 10%.

From FIG. 10, it can be seen that Example 8-4 had higher-speed performance compared to Examples 8-1 to 8-3. From this, it can be seen that when the thickness of the first layer 31 and the thickness of the second layer 32 are the same, high-speed performance is improved compared to when the thickness of the first layer 31 and the thickness of the second layer 32 are different. In addition, from FIG. 10, it can be seen that the afterglow characteristics of Examples 8-1 to 8-3 were approximately the same, and that Examples 8-1 to 8-3 had approximately the same high-speed performance regardless of the thickness of the first layer 31.

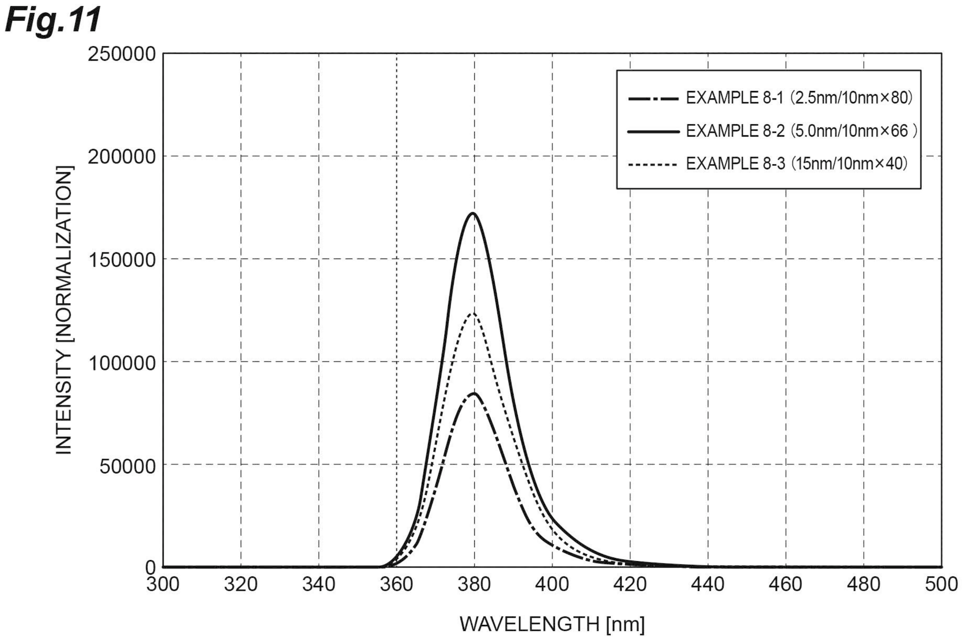

FIG. 11 is a graph showing the comparison results of the intensities of photoluminescence (PL) for Examples 8-1 to 8-3. From

FIG. 11, when the emission intensities at the peak wavelengths are compared, it can be seen that the emission intensity of Example 8-2 in which the thickness of the first layer 31 was 5.0 nm was higher than the emission intensity of Example 8-1 in which the thickness of the first layer 31 was 2.5 nm and the emission intensity of Example 8-3 in which the thickness of the first layer 31 was 15 nm. From this, when the thickness of the first layer 31 is increased from 2.5 nm to 15 nm, it is considered that the emission intensity increases until a predetermined thickness (for example, 5.0 nm) is reached, and then decreases. Therefore, it is considered that high brightness can be achieved by setting the thickness of the first layer 31 to 2.5 nm or more and 15 nm or less.

As described above, from FIGS. 9 and 11, it is considered that high brightness can be achieved by setting the thickness of the first layer 31 to 2.5 nm or more and 15 nm or less, regardless of whether the emission is due to cathodoluminescence or photoluminescence.

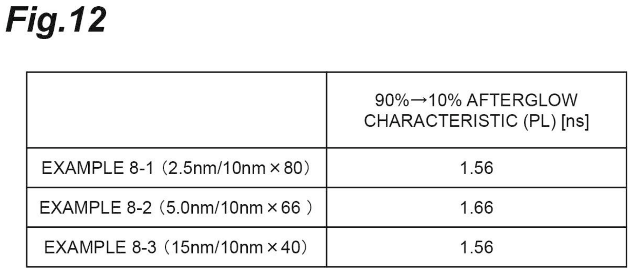

FIG. 12 is a table showing the comparison results of afterglow characteristics for Examples 8-1 to 8-3. The "90% to 10% afterglow characteristics" shown in the table of FIG. 12 refers to the time it takes for the brightness of the scintillation light generated by photoluminescence to decrease from 90% at the time of emission to 10%. From FIG. 12, it can be seen that the afterglow characteristics of Examples 8-1 to 8-3 were approximately the same, and that Examples 8-1 to 8-3 had approximately the same high-speed performance regardless of the thickness of the first layer 31.

### Reference Signs List

1: scintillator, 2: support substrate, 3: emission layer, 4: metal layer, 31: first layer, 32: second layer.

## Claims

1. A scintillator, comprising:
a support substrate; and
an emission layer that is formed of ZnO, is disposed on the support substrate, and emits light in response to an incidence of charged particles or photons,
wherein the emission layer includes a plurality of first layers having a first impurity concentration, and a plurality of second layers alternately stacked with the plurality of first layers and having a second impurity concentration lower than the first impurity concentration.

2. The scintillator according to claim 1,
wherein an impurity contained in the plurality of first layers is Ga, Al, In, Sb, F, Cl, or I.

3. The scintillator according to claim 1 or 2,
wherein the first impurity concentration is 4 x 10²⁰ atoms/cm³ or less.

4. The scintillator according to any one of claims 1 to 3,
wherein a thickness of each of the plurality of first layers is 20 nm or less.

5. The scintillator according to any one of claims 1 to 4,
wherein the support substrate is formed of sapphire, quartz, glass, ScMgAlO₄, or GaN.

6. The scintillator according to any one of claims 1 to 5,
wherein the support substrate is a sapphire substrate having an a-plane as a main surface, and
the emission layer is disposed on the main surface.

7. The scintillator according to any one of claims 1 to 6, further comprising:
a metal layer disposed on the emission layer on a side opposite to the support substrate.

8. The scintillator according to claim 7,
wherein the metal layer is formed of Al or Ti.

9. The scintillator according to claim 7 or 8, further comprising:
a protection layer having a larger bandgap than ZnO and disposed between the emission layer and the metal layer.

10. The scintillator according to any one of claims 1 to 9, further comprising:
a buffer layer formed of ZnO and disposed between the support substrate and the emission layer.

11. The scintillator according to any one of claims 1 to 10,
wherein a thickness of each of the plurality of first layers is 2.5 nm or more and 15 nm or less.

12. The scintillator according to any one of claims 1 to 11,
wherein a thickness of each of the plurality of first layers is equal to a thickness of each of the plurality of second layers.
